(19) Europäisches Patentamt
European Patent Office
Office européen des brevets

(11) Veröffentlichungsnummer: **0 212 058**
**B1**

(12) # EUROPÄISCHE PATENTSCHRIFT

(45) Veröffentlichungstag der Patentschrift: **31.01.90**

(51) Int. Cl.⁴: **C07F 7/18**

(21) Anmeldenummer: **86104961.7**

(22) Anmeldetag: **11.04.86**

(54) **N-Silylpropyl-N'Acyl-Harnstoffe und Verfahren zur Herstellung.**

(30) Priorität: **06.07.85 DE 3524215**

(43) Veröffentlichungstag der Anmeldung:
**04.03.87 Patentblatt 87/10**

(45) Bekanntmachung des Hinweises auf die Patenterteilung:
**31.01.90 Patentblatt 90/5**

(84) Benannte Vertragsstaaten:
**AT BE CH DE FR GB IT LI NL**

(56) Entgegenhaltungen:
**FR-A- 1 360 907**
**US-A- 2 907 782**

**ANGEWANDTE CHEMIE INT. ED. ENGL., Band 25, Nr. 3, März 1986, Seiten 236-252, VCH Verlagsgesellschaft mbH, Weinheim, DE; U. DESCHLER et al.: "3-chloropropyltrialkoxysilanes - key intermediates for the commercial production of organofunctionalized silanes and polysiloxanes" HEM. BASIS VIRUS VIRULENCE IMMUNOGENICITY, [PAP. CONF.] 1983 (Publ. 1984), 28 000**

(73) Patentinhaber: **Degussa Aktiengesellschaft, Weissfrauenstrasse 9, D-6000 Frankfurt am Main 1(DE)**

(72) Erfinder: **Deschler, Ulrich, Dr., Birkenweg 1, D-6450 Hanau 9(DE)**
Erfinder: **Kleinschmit, Peter, Dr., Wildaustrasse 19, D-6450 Hanau 9(DE)**
Erfinder: **Michel, Rudolf, Josefstrasse 36, D-6463 Freigericht(DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).



ACTORUM AG

**Beschreibung**

Die Erfindung betrifft N-Silylpropyl-N'-Acyl-Harnstoffe, ein Verfahren zu deren Herstellung und die Freisetzung der blockierten Isocyanatfunktion.

Silane der allgemeinen Zusammensetzung I haben als Haftvermittler in Stoffsystemen, die aus einer anorganischen und einer organischen Phase bestehen, sowie zur Modifizierung OH-funktioneller Oberflächen großtechnische Bedeutung erlangt:

$(R^4O)_3Si-CH_2-CH_2-CH_2-X$ I

($R^4 = CH_3, C_2H_5$)

Zu den wichtigsten funktionellen Gruppen zählen:

X = $-NH_2$, $-SH$, $-C1$, $-O-CO-C(CH_3)=CH_2$, $-S_4-CH_2-CH_2-CH_2-Si(OR^4)_3$ ($R^4=C_2H_5$:Si69) und

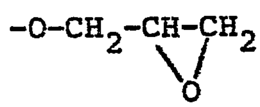

Die Isocyanatfunktion (X = $-NCO$) stellt eine besonders wertvolle funktionelle Gruppe dar:

Sie kann einerseits mit zahlreichen H-aziden, monomer aufgebauten Substanzen (Amine, Alkohole, Oxime uva.) unter Bildung neuer funktioneller Silane umgesetzt werden, andererseits auch mit Kunststoffen und Kautschuken in bindende Wechselwirkung treten. Dem Vorteil der mannigfaltigen chemischen Reaktivität stehen als Nachteile die hohe Toxizität der Isocyanatgruppe und die in der Praxis umständliche Synthese der Silane II entgegen (US-PS 4 130 576):

$(R^4O)_3Si-C_3H_6-NCO$ II

In der Industrie werden daher häufig blockierte Alkyl- und Aryl-Isocyanate eingesetzt (Z.W.Wicks, progr.Org.Coat. 9 (1981)3-28).

Als Blockierungsagentien für nicht silylhaltige organische Isocyanate dienen z.B. Alkohole (insbesondere Phenole), β-Dicarbonylverbindungen, Lactame oder Oxime. Blockierte isocyanate sind zum einen aus wässrigen Systemen anwendbar, zum anderen sind wegen der vergleichsweise geringen Toxizität entsprechend weniger aufwendige Maßnahmen zu ihrer sicheren Handhabung ausreichend.

In der US-PS 3 494 951 wird ein hydrolisierbares Silan beschrieben, aus dem bei Temperaturen von 160°C die Isocyanatfunktion freigesetzt wird, das O-Methyl-N-trimethoxysilylpropylurethan.

Diese Verbindung ist aber zum Einsatz als Haftvermittler in füllstoffverstärkten Polymersystemen deswegen wenig geeignet, weil die Thermolyse erst bei relativ hoher Temperatur abläuft und das dabei entstehende Nebenprodukt Methanol (Flammpunkt: 11°C) entsprechende Sicherheitsmaßnahmen erforderlich macht.

Die Thermolyse des O-Methyl-N-trimethoxysilylpropylurethans gelingt nur dann in guten Stoffausbeuten, wenn sehr langsam thermolysiert wird. Als Ursache dafür muß die Tatsache angesehen werden, daß das Thermolysenebenprodukt Methanol leichter flüchtig ist als das gewünschte 3-Isocyanotopropyltrimethoxysilan, so daß bei der destillativen Abtrennung des letzteren Silans aus dem Thermolysesumpf nur dann die Rekombination von Methanol und 3-Isocyanotopropyltrimethoxysilan in der Gasphase verhindert werden kann, wenn diese Abtrennung entsprechend langsam durchgeführt wird. Für ein technisches Verfahren sind die so erreichbaren Raumzeitausbeuten unbefriedigend.

Das gleiche gilt für das Verfahren zur Herstellung von 3-Isocyanotopropylsilanen durch Gasphasenveresterung von 3-Isocyanotopropyltrichlorsilan mit Alkoholen (US-PS 3 651 117), bei der die gleichzeitige unerwünschte Abreaktion der Isocyanatgruppe mit dem Alkohol nur durch eine technisch aufwendige Versuchsdurchführung zurückgedrängt werden kann.

Aufgabe der Erfindung sind hydrolisierbare Silane mit einer blockierten Isocyanatfunktion und ein Verfahren zur direkten Herstellung unter Erzielung hoher Ausbeuten.

Gleichzeitig soll die Isocyanatgruppe relativ leicht durch Thermolyse wieder freigesetzt werden können.

Gegenstand der Erfindung sind N-Silylpropyl-N'-Acyl-Harnstoffe der Formel

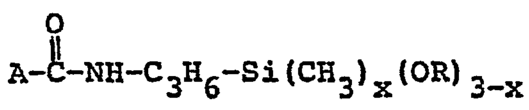

(III)

in der bedeuten

x: 0 oder 1 oder 2

R: Alkyl $C_1$-$C_6$, geradkettig oder verzweigt, (2'-methoxy)ethyl, Phenyl,

A: 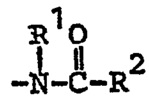

mit $R^1$: Alkyl $C_1$-$C_6$, geradkettig oder verzweigt
$R^2$: Wasserstoff, Alkyl $C_1$-$C_6$ geradkettig oder verzweigt, oder

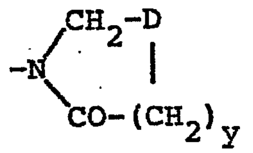 mit y = 1, 2 oder 3 und D: $-CH_2-$, $>NR^1$

Diese Verbindungen können aus wäßriger Lösung beispielsweise auf Glasfasern aufgetragen werden, die in Kunststoffe eingearbeitet werden sollen. Nach thermischer und/oder katalytischer Behandlung kann über die dann freigesetzte Isocyanatgruppe die Vernetzung erfolgen.

Ein weiterer Gegenstand der Erfindung ist ein Verfahren zur Herstellung der Verbindungen gemäß Anspruch 1, das dadurch gekennzeichnet ist, daß man in einem aprotischen, polaren organischen Lösungsmittel äquimolare Mengen eines Alkalicyanats, eines 3-Halogenpropylsilans der Formel
$X-C_3H_6-Si(CH_3)_x(OR)_{3-x}$ (IV)
und einer Verbindung der Formel

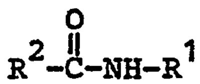 (V) oder

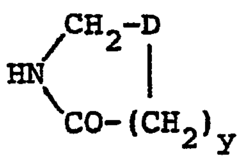 (VI)

bevorzugt in dieser Reihenfolge und bei Raumtemperatur mischt, wobei R, $R^1$, $R^2$, D, x und y die oben angegebenen Bedeutungen haben und
X = Cl, Br oder J ist,
anschließend bei erhöhter Temperatur miteinander umsetzt, nach Abschluß der Reaktion und Abkühlen des Reaktionsgemisches auf Zimmertemperatur das ausgefallene Alkalihalogenid abfiltriert und das Lösungsmittel aus dem Filtrat abdestilliert.

Das gewünschte Produkt bleibt zurück und braucht nicht weiter gereinigt zu werden.
Die Reaktanten können bei Raumtemperatur rasch miteinander vermischt werden, ohne daß das Einsetzen einer Reaktion zu befürchten ist.

Diese läßt man bei Temperaturen von 100°C - 140°C innerhalb von 1 - 8 h, bevorzugt 100 - 130°C innerhalb von 4 h, unter Schutzgasatmosphäre ablaufen. Als Schutzgase sind insbesondere Stickstoff und Argon geeignet.

Bei Verwendung der bevorzugt eingesetzten cyclischen Amide läuft die Reaktion beispielsweise nach dem folgenden Schema ab:

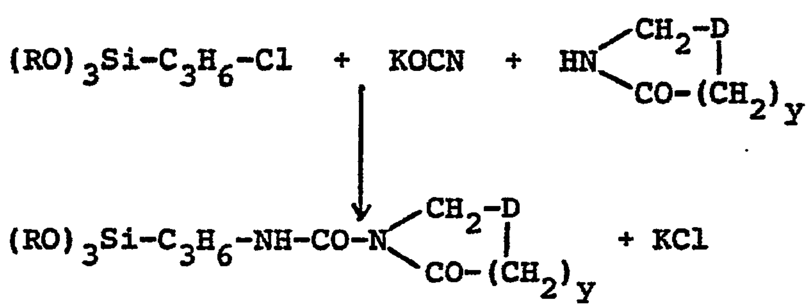 (1)

Als Lösungsmittel sind geeignet
N,N-Dimethylformamid, N,N-Dimethylacetamid,
N,N,N',N'-Tetramethylharnstoff,
N,N,N',N'-Tetramethylendiamin
N-Methylpyrrolidon, Dimethylsulfoxid, Hexamethylphosphorsäuretrisamid, besonders bevorzugt ist N,N-Dimethylformamid.
Pro Mol eingesetztem Silan verwendet man 250 - 400 ml Lösungsmittel, bevorzugt 300 ml.

Als Alkalicyanate bieten sich Natriumcyanat und insbesondere das Kaliumcyanat an.
Geeignete Silane sind
3-Chlorpropyltrimethoxysilan, 3-Chlorpropyltriethoxysilan, 3-Chlorpropyltri-i-propoxysilan, 3-Chlorpropyltri-n-propoxysilan, 3-Chlorpropyltri-t-butoxysilan, 3-Chlorpropyltri(2'-methoxy)ethoxysilan, 3-Chlorpropyldimethoxymethylsilan, 3-Chlorpropyldiethoxymethylsilan, 3-Chlorpropylmethoxydimethylsilan, 3-Chlorpropylethoxydimethylsilan, 3-Chlorpropyltriphenoxysilan und die entsprechenden Br- und J-substituierten analogen Verbindungen.

Davon werden bevorzugt eingesetzt:
3-Chlorpropyltrimethoxysilan, 3-Chlorpropyldimethoxymethylsilan, 3-Chlorpropyltriethoxysilan und 3-Chlorpropyldiethoxymethylsilan.

Als Amide setzt man beispielsweise folgende Verbindungen ein:
N-Methylformamid, dieses bevorzugt, N-Methylacetamid und die entsprechenden Ethyl- und Propylsubstituierten Amide; N-Methylpropionamid, N-Methylvalerylamid, N-Methylbutyramid und die entsprechenden Ethyl-substituierten Amide;
N-Methylcapronsäureamid,
cyclische: 2-Pyrrolidon, 1-N-Methyl-hexahydro-1,4-diazepinon der Formel

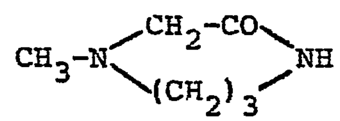

2-Piperidon und besonders bevorzugt ε-Caprolactam.

Die gewünschten N-Acyl-Harnstoffe werden nach dem erfindungsgemäßen Verfahren in hoher Ausbeute gewonnen.

Vertreter dieser neuen Verbindungsklasse sind als Rohprodukte gelbe Öle. Sie lassen sich bei Temperaturen von ≥ 135°C thermisch beispielsweise gemäß folgender Gleichung (2) zersetzen, wobei die Zersetzungstemperatur durch Einsatz katalytischer Mengen Dibutylzinndilaurat noch weiter abgesenkt werden kann:

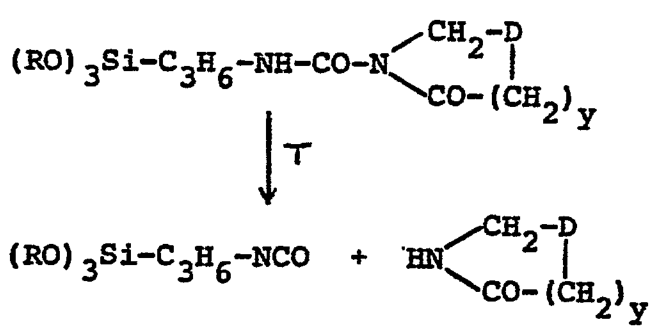


(2)

Es entstehen 3-Isocyanotopropylsilane der Formel
$OCN\text{-}C_3H_6\text{-}Si(CH_3)_x(OR)_{3-x}$ (VII).

Die Thermolyse der erfindungsgemäßen Verbindungen findet bevorzugt in einer Vakuumdestillationsapparatur bei Drücken von 100 bis 6500 Pa, bevorzugt von 200 bis 2000Pa, und einer Sumpftemperatur zwischen 130 und 160°C statt.

Dabei erweist es sich als günstig, daß im Gegensatz zu dem Verfahren gemäß US-PS 3 494 951 der Siedepunkt des Blockierungsagens in der Regel über dem des Isocyanatopropylsilans liegt, so daß eine Rekombination Der Substanzen in der Gasphase oberhalb des Destillationssumpfes nicht stattfindet.

Die Thermolysetemperatur kann durch Zugabe katalytischer Mengen Dibutylzinndilaurat, insbesondere 0,5 bis 5 Mol-% bezogen auf den Acylharnstoff, abgesenkt werden, so daß man bei einer Temperatur von 115°C an thermolysieren kann.

Experimentelles

Alle Umsetzungen wurden in Laborstandardapparaturen unter Schutzgasatmosphäre folgendermaßen durchgeführt:
Äquimolare Mengen an Kaliumcyanat, 3-Chlorpropylalkoxysilan und Carbonsäureamid werden in dieser Reihenfolge in Dimethylformamid (300 ml/Mol Alkalicyanat) vermischt und innerhalb von 30 min auf ca. 110°C unter Rühren erwärmt. Bei dieser Temperatur wird eine leichte Exothermie beobachtet, wodurch die Temperatur von selbst bis auf etwa 130°C ansteigt. Es wird für weitere 4 h bei 130°C gerührt. Nach dem Abkühlen des Reaktionsgemisches wird vom ausgefallenen Alkalichlorid abfiltriert und das Lösungsmittel abgezogen. Die Titelverbindungen fallen dann als gelbe, viskose Flüssigkeiten an, die keinem weiteren Reinigungsschritt unterzogen zu werden brauchen.

Beispiel 1

In einem 4 l-Dreihalskolben mit KPG-Rührer und Wasserkühler werden bei Raumtemperatur unter Schutzgas die folgenden Stoffe in der genannten Reihenfolge innerhalb von 5 min zugegeben:

900 ml DMF
235,5 g ≙ 3,0 mol Kaliumcyanat
722,4 g ≙ 3,0 mol 3-Chlorpropyltriethoxysilan
339,5 g ≙ 3,0 mol ε-Caprolactam

Das Reaktionsgemisch wird dann innerhalb von 30 min auf ca. 110°C erwärmt. Bei dieser Temperatur tritt eine leichte Exothermie ein. Man läßt die Reaktionstemperatur nicht über 130°C ansteigen und die Reaktion für insgesamt 4 Stunden bei 130°C ablaufen. Nach dem Abkühlen des Reaktionsgemisches wird das ausgefallene Kaliumchlorid abfiltriert der Niederschlag dreimal mit je 100 ml DMF gewaschen. Von den vereinigten Filtraten zieht man das Lösungsmittel mit Hilfe eines Rotationsverdampfers ab. Das Produkt bleibt als gelbe, ölige Flüssigkeit zurück und bedarf keiner weiteren Reinigung.
Auswaage: 1033,7 g entspr. 95,6% d.Th., hellgelbe Flüssigkeit;

| $C_{16}H_{32}N_2O_5$ Si (360,525): | C | H | N |
|---|---|---|---|
| (SL30-3-1) | ber.: 53,30 % | 8,94 % | 7,77 % |
| | gef.: 53,66 % | 9,36 % | 7,33 % |

Das Molekulargewicht wurde mittels Massenspektrometrie (vgl. Abb. 1) bestätigt.
Das $^1$H–NMR-Spektrum (250 MHz) sowie das IR-Spektrum des Produkts sind als weitere Charakterisierungshilfen in Form der Abbildungen 2 und 3 beigefügt.

Beispiele 2 bis 8

Wie in Beispiel 1 beschrieben, wurden unter Variation der Einsatzstoffe 7 weitere Acylharnstoffe mit hydrolysierbaren Silylgruppen hergestellt. Die Ansatzgrößen und die Art der Einsatzstoffe sind in Tabelle 1 zusammengefaßt, Tabelle 2 enthält Daten zur Produktcharakterisierung. Bei allen Produkten handelt es sich um ölige, gelbe bis hellbraune Flüssigkeiten, die vor der Anwendung nicht weiter gereinigt zu werden brauchen.

Beispiel 9

Thermolyse eines Acylharnstoffs und destillative Abtrennung des Isocyanatopropylsilanes:
150 g des nach Beispiel 7 erhaltenen Produktes werden in einer Vakuumdestillationsapparatur mit Vigreux-Kolonne bei einem Vakuum von 20 mbar≙ 2000 Pa erhitzt. Beginnend bei einer Sumpftemperatur von 142°C setzt die thermische Zersetzung des Acylharnstoffes ein. Bei einer Kopftemperatur von 107 - 116°C gehen 90,2 g einer farblosen Flüssigkeit über, die sich durch $^1$H-NMR-Spektroskopie als ein Gemisch aus ca. 85 % 3-Isocyanatopropyltrimethoxysilan und 15 % ε-Caprolactam identifizieren läßt. Der Reaktionssumpf (58,7 g) besteht aus ε-Caprolactam und Tris(trimethoxysilylpropyl)isocyanurat. Durch nochmalige Vakuumdestillation bei 1mbar lassen sich aus dem Destillat der Thermolyse 70,6 g 3-Isocyanatopropyltrimethoxysilan gewinnen entsprechend eine Ausbeute von 73 % bezogen auf die bei der Thermolyse eingesetzte Menge an Acylharnstoff.

Beispiel 10

Katalytische Spaltung eines Acylharnstoffes:
154,5 g des nach Beispiel 7 erhaltenen Produkts werden mit 5 g Dibutylzinndilaurat versetzt und in einer Vakuumdestillationsapparatur mit Vigreux-Kolonne bei einem Vakuum von 2mbar≙ 200Pa erhitzt. Beginnend bei einer Sumpftemperatur von 115°C setzt die Zersetzung des Acylharnstoffes ein. Bei einer Kopftemperatur von 77 - 84°C gehen 100,3 g einer farblosen Flüssigkeit über, die laut $^1$H-NMR-Spektroskopie ein Gemisch aus ca. 90 % Isocyanatopropyltrimethoxysilan und 10% ε-Caprolactam darstellt. Durch nochmalige Vakuumdestillation lassen sich daraus 85,8 g 3-Isocyanatopropyltrimethoxysilan gewinnen entsprechend einer Ausbeute von 86 % bezogen auf die bei der katalytischen Zersetzung eingesetzten Menge an Acylharnstoff.

Tabelle 1: Einsatzstoffe und Produkte

| Beispiel | Ansatz-größe | Silaneinsatz-stoff | Säureamid | Alkalicya-nat | Lösungs-mittel (menge) | Produkt (Formel) |
|---|---|---|---|---|---|---|
| 2 | 0,5 Mol | 3-Chlorpropyltri-methoxysilan | N-Methyl-formamid | Kalium-cyanat | DMF (150 ml) | 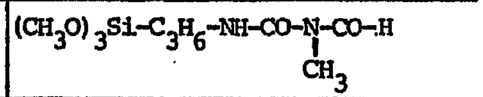 |
| 3 | 0,75 Mol | 3-Chlorpropyltri-methoxysilan | 2-Pyrroli-don | Natrium-cyanat | DMSO(250 ml) | 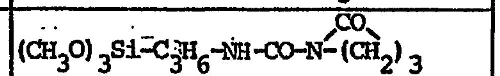 |
| 4 | 0,5 Mol | 3-Brompropyl-triethoxy-silan | 2-Pyrroli-don | Kalium-cyanat | DMF (200 ml) | 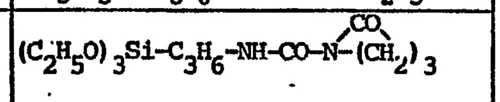 |
| 5 | 0,5 Mol | 3-Jodpropyltri-n-Propoxysilan | 2-Pyrroli-don | Natrium-cyanat | DMF (150 ml) | 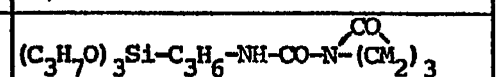 |
| 6 | 1 Mol | 3-Chlorpropyltri-methoxysilan | 2-Piperi-don | Kalium-cyanat | N-Methyl-pyrrolidon (300 ml) | 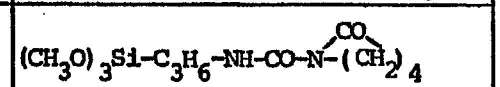 |
| 7 | 1 Mol | 3-Chlorpropyltri-methoxysilan | ε-Capro-lactam | Kalium-cyanat | DMF (300 ml) | 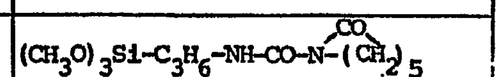 |
| 8 | 0,2 Mol | 3-Chlorpropyldi-methoxymethyl-silan | ε-Capro-lactam | Natrium-cyanat | DMF (50 ml) | 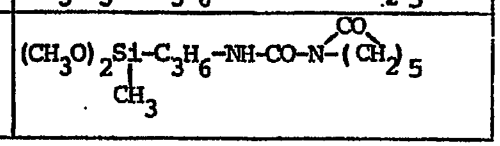 |

<u>Tabelle 2:</u> Produktcharakterisierung

| Beispiel | Produktmenge | Ausbeute | Summenformel | Molekular-gewicht | | Analyse C | Analyse H | Analyse N |
|---|---|---|---|---|---|---|---|---|
| | | | | | ber.:<br>gef.: | | | |
| 2 | 115,4 g | 87,3 % | $C_9H_{20}N_2O_5Si$ | 294,354 | | 40,89 %<br>40,93 % | 7,63 %<br>7,76 % | 10,60 %<br>11,18 % |
| 3 | 209,7 g | 96,3 % | $C_{11}H_{22}N_2O_5Si$ | 290,392 | | 45,50 %<br>45,27 % | 7,64 %<br>8,17 % | 9,65 %<br>9,88 % |
| 4 | 162,4 g | 97,7 % | $C_{14}H_{28}N_2O_5Si$ | 332,474 | | 50,58 %<br>50,17 % | 8,49 %<br>9,03 % | 8,43 %<br>8,39 % |
| 5 | 182,8 g | 97,6 % | $C_{17}H_{34}N_2O_5Si$ | 374,555 | | 54,52 %<br>54,56 % | 9,15 %<br>9,55 % | 7,48 %<br>7,54 % |
| 6 | 298,9 g | 98,2 % | $C_{12}H_{24}N_2O_5Si$ | 304,419 | | 47,35 %<br>47,68 % | 7,95 %<br>8,23 % | 9,20 %<br>9,45 % |
| 7 | 304,5 g | 95,6 % | $C_{13}H_{26}N_2O_5Si$ | 318,447 | | 49,03 %<br>48,54 % | 8,23 %<br>8,66 % | 8,80 %<br>8,43 % |
| 8 | 55,9 g | 92,5 % | $C_{13}H_{26}N_2O_4Si$ | 302,448 | | 47,66 %<br>47,95 % | 8,00 %<br>8,25 % | 9,26 %<br>9,12 % |

## Patentansprüche

1. N-Silylpropyl-N'-Acyl-Harnstoffe der Formel

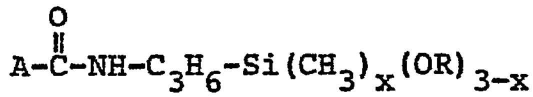

(III)

in der bedeuten
x: 0 oder 1 oder 2
R: Alkyl $C_1$-$C_6$, geradkettig oder verzweigt, (2'-methoxy)ethyl, Phenyl,

A: 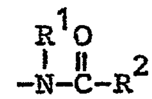

mit $R^1$: Alkyl $C_1$-$C_6$, geradkettig oder verzweigt
$R^2$: Wasserstoff, Alkyl $C_1$-$C_6$, geradkettig oder verzweigt,

oder 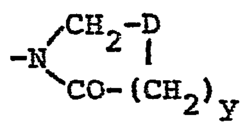 mit y = 1 oder 2 oder 3

und D: $-CH_2-$, $>NR^1$

2. Verfahren zur Herstellung der Verbindungen gemäß Anspruch 1, dadurch gekennzeichnet, daß man in einem aprotischen, polaren organischen Lösungsmittel äquimolare Mengen eines Alkalicyanats, eines 3-Halogenpropylsilans der Formel
$X$-$C_3H_6$-$Si(CH_3)_x(OR)_{3-x}$ (IV)
und einer Verbindung der Formel

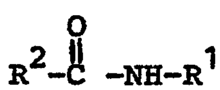

(V) oder

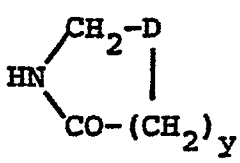

(VI)

bevorzugt in dieser Reihenfolge und bei Raumtemperatur mischt, wobei R, $R^1$, $R^2$, D, x und y die oben angegebenen Bedeutungen haben und
X = Cl, Br oder J ist,
anschließend bei erhöhter Temperatur umsetzt, nach Abschluß der Reaktion und Abkühlen des Reaktionsgemisches das ausgefallene Alkalihalogenid abfiltriert und das Lösungsmittel aus dem Filtrat abdestilliert.

3. Verfahren nach Anspruch 2, dadurch gekennzeichnet, daß man die Reaktion für 1 bis 8h bei 100 - 140°C durchführt.

4. Verfahren nach den Ansprüchen 2 und 3, dadurch gekennzeichnet, daß man ε-Caprolactam einsetzt.

5. Verfahren nach den Ansprüchen 2 bis 5, dadurch gekennzeichnet, daß man als Lösungsmittel Dimethylformamid einsetzt.

6. Verfahren zur Freisetzung der blockierten Isocyanatfunktion aus Verbindungen gemäß Anspruch 1, dadurch gekennzeichnet, daß man diese Verbindungen unter Vakuum thermolysiert und die gebildeten 3-Isocyanotopropylsilane der Formel
$OCN$-$C_3H_6$-$Si(CH_3)_x(OR)_{3-x}$ VII
abdestilliert und gegebenenfalls mit einer zweiten Vakuumdestillation reinigt.

7. Verfahren nach Anspruch 6, dadurch gekennzeichnet, daß man die Thermolyse in Gegenwart katalytischer Mengen Dibutylzinndilaurat durchführt.

**Claims**

1. N-silylpropyl-N'-acyl-ureas of the formula

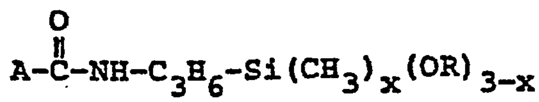

(III)

in which
x denotes 0 or 1 or 2
R denotes straight-chain or branched $C_1$–$C_6$-alkyl, (2'-methoxy)ethyl or phenyl and
A denotes

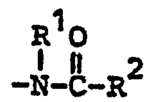

where $R^1$ denotes straight-chain or branched $C_1$–$C_6$-alkyl and $R^2$ denotes hydrogen or straight-chain or branched $C_1$–$C_6$-alkyl,
or

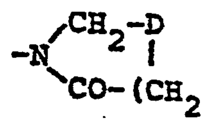

where y = 1, 2 or 3 and D denotes $-CH_2-$ or $>NR^1$

2. Process for the preparation of the compounds according to claim 1, characterized in that equimolar amounts of an alkali metal cyanate, a 3-halogenopropylsilane of the formula
$X–C_3H–Si(CH_3)_x(OR)_{3-x}$ (IV)
and a compound of the formula

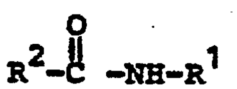

(V)

or

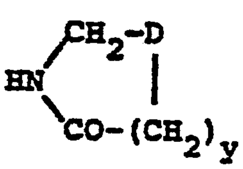

(VI)

wherein R, $R^1$, $R^2$, D, x and y have the abovementioned meanings and X = Cl, Br or I, are mixed, preferably in this sequence and at room temperature, in an aprotic, polar organic solvent and are then reacted with one another at elevated temperature, when the reaction has ended and the reaction mixture has cooled to room temperature the alkali metal halide which has precipitated is filtered off and the solvent is distilled off from the filtrate.

3. Process according to claim 2, characterized in that the reaction is carried out for 1 to 8 h at 100–140°C.

4. Process according to claims 2 and 3, characterized in that ε-caprolactam is employed.

5. Process according to claims 2 to 5, characterized in that dimethylformamide is employed as the solvent.

6. Process for liberation of the blocked isocyanate function from compounds according to claim 1, characterized in that these compounds are subjected to thermolysis in vacuo and the 3-isocyanatopropylsilanes formed of the formula
$OCN–C_3H_6–Si(CH_3)_x(OR)_{3-x}$ VII
are distilled off and if appropriate purified by a second vacuum distillation.

7. Process according to claim 6, characterized in that the thermolysis is carried out in the presence of catalytic amounts of dibutyltin dilaurate.

**Revendications**

1. N-silylpropyl-N'-acylurées de formule:

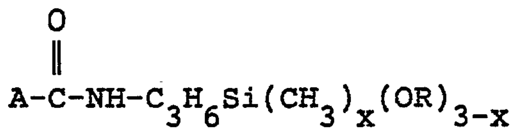

(III)

dans laquelle:
x signifie 0 ou 1 ou 2
R signifie un alcoyle en $C_1$–$C_6$, linéaire ou ramifié, (2-méthoxyéthyle) ou phényle
A signifie:

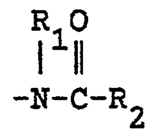

A signifie
avec $R_1$: alcoyle en $C_1$–$C_6$ linéaire ou ramifié,
$R_2$: hydrogène, alcoyle en $C_1$–$C_6$ linéaire ou ramifié
où A signifie:

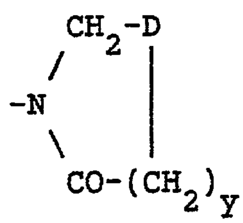

avec y = 1 ou 2 ou 3 et
D = $-CH_2-$ et > $NR^1$

2. Procédé d'obtention des composés selon la revendication 1, caractérisé en ce que l'on mélange dans un solvant organique polaire aprotique, des quantités équimolaires d'un cyanate de métal alcalin, d'un 3-halogénopropylsilane de formule:
$X–C_3H_6–Si(CH_3)_x(OR)_{3-x}$ (IV)
et d'un composé de formule

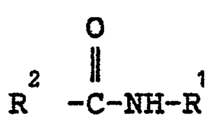

(V)

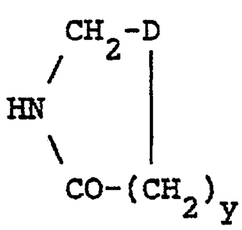

(VI)

de préférence dans cette séquence et à température ordinaire, pour lesquelles R, $R^1$, $R^2$, D et y ont les significations fournies ci-dessus et X représente Cl, Br ou I, ensuite à température plus élevée, on met

en réaction, après achèvement de la réaction et refroidissement du mélange réactionnel, on sépare par filtration l'halogénure de métal alcalin qui a précipité et on élimine par distillation le solvant du filtrat.

3. Procédé selon la revendication 2, caractérisé en ce que l'on effectue la réaction pendant 1 à 8 heures à 100–140°C.

4. Procédé selon les revendications 2 et 3, caractérisé en ce que l'on met en œuvre le ε-caprolactame.

5. Procédé selon les revendications 2 à 4, caractérisé en ce que l'on met en œuvre comme solvant le diméthylformamide.

6. Procédé pour la libération de la fonction isocyanate bloquée à partir des composés selon la revendication 1, caractérisé en ce que l'on thermolyse ces composés sous vide et sépare par distillation les 3-isocyanatopropylsilanes formés, de formule:

$OCN–C_3H_6–SI(CH3)_x(OR)_{3-x}$ (VII)

et le cas échéant, on purifie par une deuxième distillation sous vide.

7. Procédé selon la revendication 6, caractérisé en ce que l'on effectue la thermolyse en présence de quantités catalytiques de dilaurate de dibutylétain.

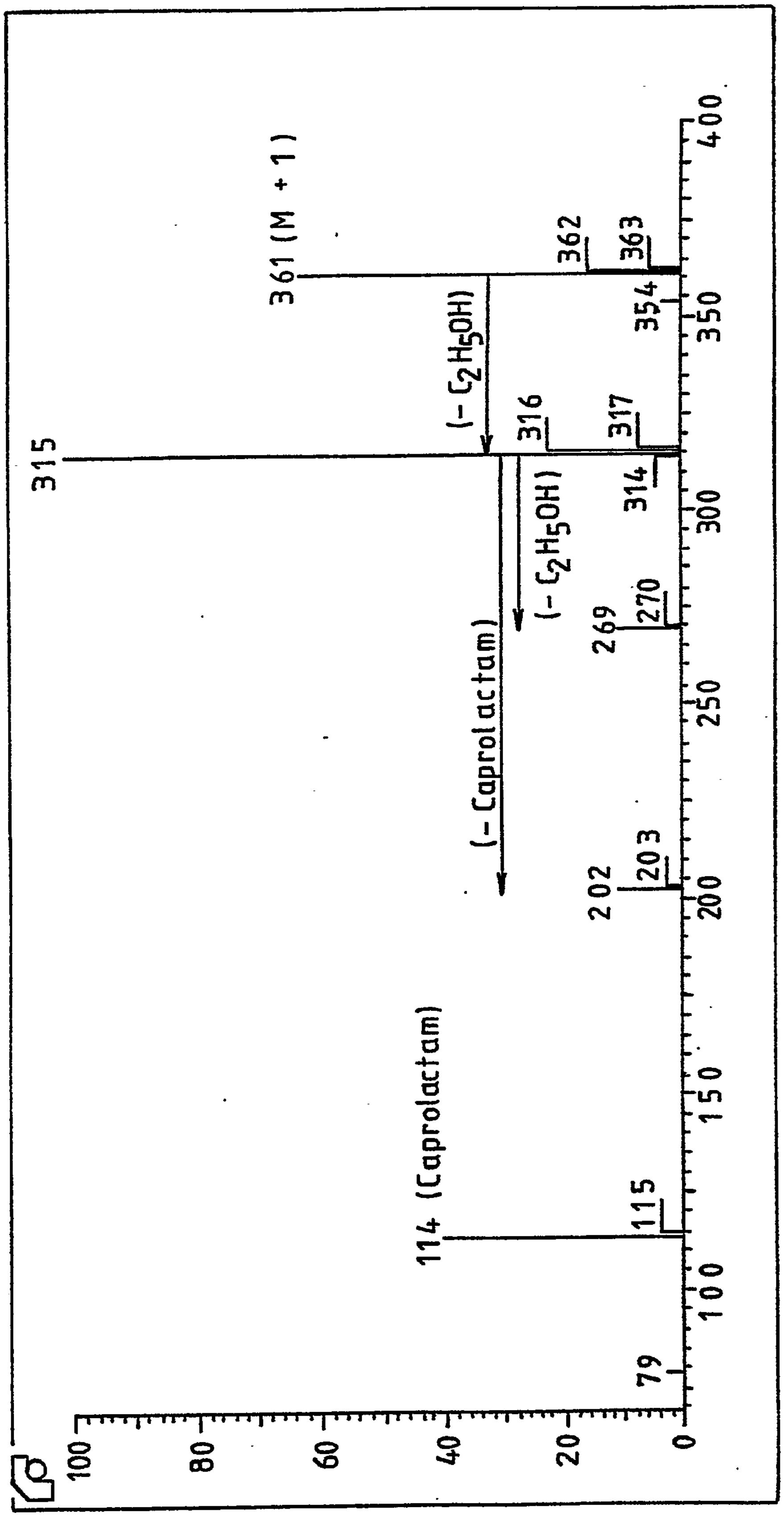


Abbildung 1: Massenspektrum SL 30-3-1

Abb. 2 :

$^1$H-NMR-Spektr.
( 250 MHz )
von
SL 30-3-1

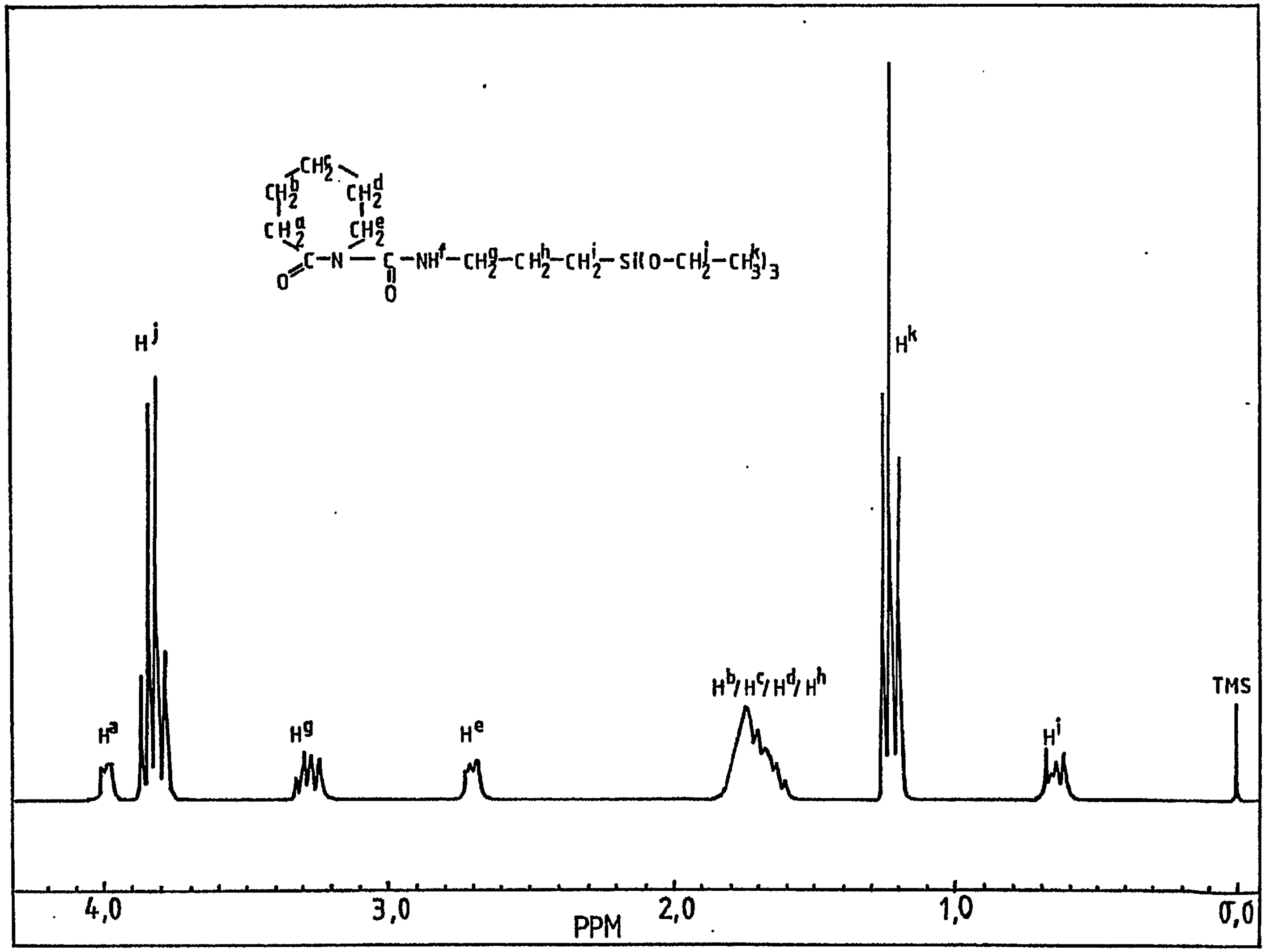

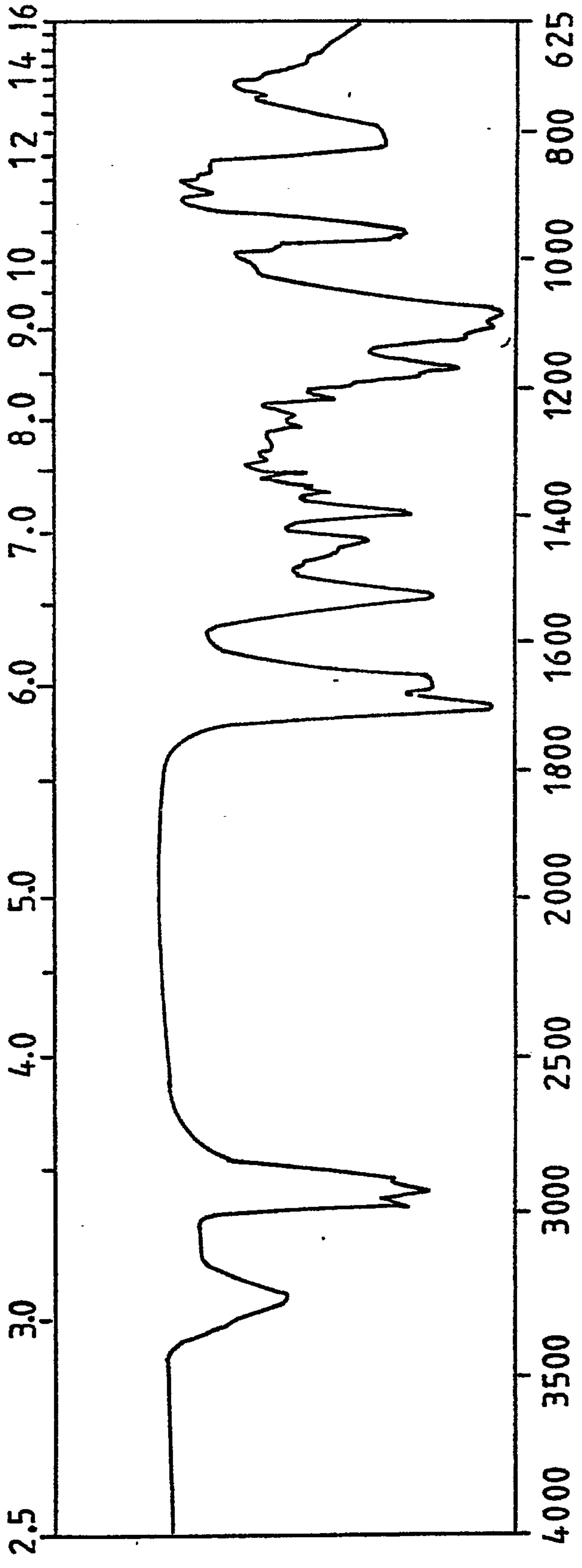


Abbildung 3: IR-Spektrum von 30-3-1